# EUROPEAN PATENT SPECIFICATION

(11) **EP 1 701 835 B1**
(45) Date of publication and mention of the grant of the patent: **21.05.2014**
(21) Application number: 05711327.6
(22) Date of filing: 06.01.2005
(51) Int. Cl.: B29C 65/16, C08L 67/02

(54) **PROCESS FOR LASER WELDING POLYESTER COMPOSITIONS**
VERFAHREN ZUM LASERSCHWEISSEN VON POLYESTERZUSAMMENSETZUNGEN
PROCEDE POUR SOUDER AU LASER DES COMPOSITIONS A BASE DE POLYESTERS

(30) Priority: 06.01.2004 US 534823 P
(43) Date of publication of application: 20.09.2006
(73) Proprietor: E.I. DU PONT DE NEMOURS AND COMPANY, Wilmington, DE 19898 (US)
(72) Inventor: KOBAYASHI, Toshikazu, Chadds Ford, Pennsylvania 19317 (US); SUMI, Hiroyuki, Kawachi-gun, Tochigi-Ken 329-0434 (JP)
(74) Representative: Heinemann, Monica
(86) International application number: PCT/US2005/000688
(87) International publication number: WO 2005/068162

(56) References cited:
- EP-A- 0 811 661
- DATABASE WPI Section Ch, Week 199737 Derwent Publications Ltd., London, GB; Class A12, AN 1997-399742 XP002327133 & JP 09 176467 A (POLYPLASTICS KK) 8 July 1997 (1997-07-08)
- DATABASE WPI Section Ch, Week 200043 Derwent Publications Ltd., London, GB; Class A18, AN 2000-485262 XP002327134 & JP 2000 154309 A (DAICEL CHEM IND LTD) 6 June 2000 (2000-06-06)
- DATABASE WPI Section Ch, Week 200421 Derwent Publications Ltd., London, GB; Class A18, AN 2004-217672 XP002327135 -& JP 2003 292752 A (TORAY IND INC) 15 October 2003 (2003-10-15)

## Description

### Field of the Invention

This invention relates to a process for laser welding parts comprising thermoplastic polyester compositions that are resistant to thermal shock. The compositions comprise thermoplastic polyesters and an epoxidized block copolymer derived from at least one vinyl aromatic compound and at least one conjugated diene.

### Background of the Invention

It is often desired to produce molded plastic parts that can be mechanically assembled into more complex parts. Traditionally, plastic parts have been assembled by gluing or bolting them together or using snap-fit connections. These methods suffer from the drawback that they add complex additional steps to the assembly process. Snap-fit connections are often not gas- and liquid-tight and require complex designs. Newer techniques are vibration and ultrasonic welding, but these can also require complex part designs and welding apparatuses. Additionally, the friction from the process can generate dust that can contaminate the inside of the parts. This is a particular problem when sensitive electrical or electronic components are involved.

A more recently-developed technique is laser welding. In this method, two polymeric objects to be joined have different levels of light transmission at the wavelength of the laser that is used. One object is at least partially transparent to the wavelength of the laser light (and referred to as the "relatively transparent" object), while the second part absorbs a significant portion of the incident radiation (and is referred to as the "relatively opaque" object). Each of the objects presents a faying surface and the relatively transparent object present an impinging surface, opposite the faying surface thereof. The faying surfaces are brought into contact, thus forming a juncture. A laser beam is directed at the impinging surface of the relatively transparent object such that it passes through the first object and irradiates the faying surface of the second object, causing the first and second objects to be welded at the juncture of the faying surfaces. See generally U.S. Patent 5,893,959. This process can be very clean, simple, and fast and provides very strong, easily reproducible welds and significant design flexibility.

It is often desirable to add additives to polyester compositions to enhance their properties. For example, tougheners can improve the resistance of compositions to thermal shock, which is important for many automotive applications, and in particular, for parts used in the engine compartment. However, the degree to which a material will transmit incident laser radiation is in part a function of the chemical composition of the components of the composition, and many conventional polyester additives render compositions too opaque to laser radiation at the wavelengths used for welding to generate a strong laser weld. Disclosed herein is a process for laser welding objects made from polyester compositions that have good resistance to thermal shock.

EP-A-811661 discloses a polyester resin composition comprising a thermoplastic polyester and a modified block copolymer comprising a block comprising a vinyl aromatic compound and another block comprising a non-hydrogenated and/or hydrogenated conjugated diene compound in the same molecule wherein the conjugated diene component is partially or wholly epoxidized.

JP-A-2003292752 discloses a resin composition for laser welding containing polybutylene terephthalate and a resin such as polycarbonate, acrylonitrile resin, polyethersulfone and polyethylene terephthalate.

### Summary of the Invention

There is disclosed and claimed herein a process for welding a first polymeric object to second polymeric object using laser radiation, wherein said first polymeric object is relatively transparent to said laser radiation and said second object is relatively opaque to said laser radiation, said first and said second objects each presenting a faying surface, said first object presenting an impinging surface, opposite said faying surface thereof, said process comprising the steps of (1) bringing the faying surfaces of said first and second objects into physical contact so as to form a juncture therebetween and (2) irradiating said first and second objects with said laser radiation such that said laser radiation impinges the impinging surface, passes through said first object and irradiates said faying surface of said second object, causing said first and second objects to be welded at the juncture of the faying surfaces, wherein said first polymer object is formed from a polyester composition comprising
(a) about 30 to about 98 weight percent of a thermoplastic polyester;
(b) about 2 to about 30 weight percent of an epoxidized block copolymer that is obtained by epoxidizing
   (i) a block copolymer comprising at least one polymer block (A) derived from at least one aromatic vinyl compound and at least one polymer block (B) that is derived from at least one conjugated diene, or
   (ii) a block copolymer that is a partial hydrogenation product of (i); and
(c) 0 to about 50 weight percent of at least one inorganic filler or reinforcing agent,
wherein the above-stated percentages of components (a)-(c) are based on the total weight of the composition

Laser-welded articles made from the process of the invention are also disclosed herein.

### Brief Description of the Drawings

Figs. 1, 2 and 3 are a side elevation, top plan view and a perspective view, respectively, of a test piece 11 for measuring weld strength as reported herein.
Fig. 4 is a perspective view of test pieces 11', a relatively transparent object and 11", a relatively opaque object, having their respective faying surfaces in contact and placed in position for a laser welding.

### Detailed Description of the Invention

It has been discovered that thermoplastic polyester compositions for use in forming laser weldable parts with good thermal shock resistance in accordance with the invention can be obtained when the polyester is melt-blended with an epoxidized block copolymer derived from at least one vinyl aromatic compound and at least one conjugated diene.

Any thermoplastic polyester may be used in the compositions used in the invention. Mixtures of thermoplastic polyesters and/or thermoplastic polyester copolymers may also be used. The term "thermoplastic polyester" as used herein includes polymers having an inherent viscosity of 0.3 or greater and that are, in general, linear saturated condensation products of diols and dicarboxylic acids, or reactive derivatives thereof. Preferably, they will comprise condensation products of aromatic dicarboxylic acids having 8 to 14 carbon atoms and at least one diol selected from the group consisting of neopentyl glycol, cyclohexanedimethanol, 2,2-dimethyl-1,3-propane diol and aliphatic glycols of the formula HO(CH₂)ₙOH where n is an integer of 2 to 10. Up to 20 mole percent of the diol may be an aromatic diol such as ethoxylated bisphenol A, sold under the tradename Dianol® 220 by Akzo Nobel Chemicals, Inc.; hydroquinone; biphenol; or bisphenol A. Up to 50 mole percent of the aromatic dicarboxylic acids can be replaced by at least one different aromatic dicarboxylic acid having from 8 to 14 carbon atoms, and/or up to 20 mole percent can be replaced by an aliphatic dicarboxylic acid having from 2 to 12 carbon atoms. Copolymers may be prepared from two or more diols or reactive equivalents thereof and at least one dicarboxylic acid or reactive equivalent thereof or two or more dicarboxylic acids or reactive equivalents thereof and at least one diol or reactive equivalent thereof. Difunctional hydroxy acid monomers such as hydroxybenzoic acid or hydroxynaphthoic acid or their reactive equivalents may also be used as comonomers.

Preferred polyesters include poly(ethylene terephthalate) (PET), poly(1,4-butylene terephthalate) (PBT), poly(propylene terephthalate) (PPT), poly(1,4-butylene naphthalate) (PBN), poly(ethylene naphthalate) (PEN), poly(1,4-cyclohexylene dimethylene terephthalate) (PCT), and copolymers and mixtures of the foregoing. Also preferred are 1,4-cyclohexylene dimethylene terephthalate/isophthalate copolymer and other linear homopolymer esters derived from aromatic dicarboxylic acids, including isophthalic acid; bibenzoic acid; naphthalenedicarboxylic acids including the 1,5-; 2,6-; and 2,7-naphthalenedicarboxylic acids; 4,4'-diphenylenedicarboxylic acid; bis(*p*-carboxyphenyl) methane; ethylene-bis-*p*-benzoic acid; 1,4-tetramethylene bis(*p*-oxybenzoic) acid; ethylene bis(*p*-oxybenzoic) acid; 1,3-trimethylene bis(*p-*oxybenzoic) acid; and 1,4-tetramethylene bis(*p*-oxybenzoic) acid, and glycols selected from the group consisting of 2,2-dimethyl-1,3-propane diol; neopentyl glycol; cyclohexane dimethanol; and aliphatic glycols of the general formula HO(CH₂)ₙOH where n is an integer from 2 to 10, e.g., ethylene glycol; 1,3-trimethylene glycol; 1,4-tetramethylene glycol;-1,6-hexamethylene glycol; 1,8-octamethylene glycol; 1,10-decamethylene glycol; 1,3-propylene glycol; and 1,4-butylene glycol. Up to 20 mole percent, as indicated above, of one or more aliphatic acids, including adipic, sebacic, azelaic, dodecanedioic acid or 1,4-cyclohexanedicarboxylic acid can be present. Also preferred are copolymers derived from 1,4-butanediol, ethoxylated bisphenol A, and terephthalic acid or reactive equivalents thereof. Also preferred are random copolymers of at least two of PET, PBT, and PPT, and mixtures of at least two of PET, PBT, and PPT, and mixtures of any of the forgoing.

It is particularly preferred to use a poly(ethylene terephthalate) that has an inherent viscosity (IV) of at least about 0.5 at 30°C in a 3:1 volume ratio mixture of methylene chloride and trifluoroacetic acid. PET with a higher inherent viscosity in the range of 0.80 to 1.0 can be used in applications requiring enhanced mechanical properties such as increased tensile strength and elongation.

The thermoplastic polyester may also be in the form of copolymers that contain poly(alkylene oxide) soft segments. The poly(alkylene oxide) segments are to be present in about 1 to about 15 parts by weight per 100 parts per weight of thermoplastic polyester. The poly(alkylene oxide) segments have a number average molecular weight in the range of about 200 to about 3,250 or, preferably, in the range of about 600 to about 1,500. Preferred copolymers contain poly(ethylene oxide) incorporated into a PET or PBT chain. Methods of incorporation are known to those skilled in the art and can include using the poly(alkylene oxide) soft segment as a comonomer during the polymerization reaction to form the polyester. PET may be blended with copolymers of PBT and at least one poly(alkylene oxide). A poly(alkyene oxide) may also be blended with a PET/PBT copolymer. The inclusion of a poly(alkylene oxide) soft segment into the polyester portion of the composition may accelerate the rate of crystallization of the polyester.

The thermoplastic polyester will preferably be present in about 30 to about 98 weight percent, or more preferably about 50 to about 80 weight percent, based on the total weight of the composition.

The epoxidized block copolymer derived from at least one vinyl aromatic compound and at least one conjugated diene used in the present invention is described in US Patent Application Publication 2003/0207966. The epoxidized block copolymer is obtained by epoxidizing (i) a block copolymer comprising at least one polymer block (A) derived from at least one aromatic vinyl compound and at least one polymer block (B) derived from at least one conjugated diene, or (ii) a block copolymer that is a product of the partial hydrogenation of (i). Examples of suitable aromatic vinyl compounds for use in preparing polymer block (A) include styrene, alkyl-substituted styrenes such as α-alkyl-substituted styrenes, alkoxy-substituted styrenes, vinyl naphthalene, alkyl-substituted vinyl naphthalenes, divinylbenzene, and vinyltoluene. Styrene is preferred. Examples of suitable conjugated dienes for use in preparing polymer block (B) include 1,3-butadiene, isoprene, 1,3-pentadiene, 2,3-dimethyl-1,3-butadiene, piperylene, 3-butyl-1,3-octadiene, and phenyl-1,3-butadiene. Preferred are 1,3-butadiene and isoprene are preferred. The block copolymer may be in the form of A-B-A, B-A-B, B-A-B-A A-B-A-B-A; etc., where "A" represents a polymer block (A) derived from at least one aromatic vinyl compound and "B" represents a polymer block (B) derived from at least one conjugated diene. The block copolymer may be linear, branched, radial, or a combination. Preferred block copolymers are styrene-butadiene-styrene block copolymers.

The epoxidized block copolymer will preferably be present in about 2 to about 30 weight percent, or more preferably about 5 to about 20 weight percent, based on the total weight of the composition.

Further, the compositions used in the present invention may optionally comprise up to about 50 weight percent, based on the total weight of the composition, of at least one inorganic filler and/or reinforcing agent such as glass fibers, hollow spheres, bead, flake, or milled glass, mica, wollastonite, talc, and calcium carbonate. When used, the inorganic filler and/or reinforcing agent will preferably be present in about 5 to about 50 weight percent and more preferably in about 10 to about 35 weight percent, based on the total weight of the composition.

The compositions used in the present invention may optionally contain about 5 to about 25 weight percent of at least one flame retardant, as long as the presence of these materials does not reduce the optical transmittance of parts made from the composition to a point at which laser welding is unfeasible. Examples of flame retardants include oligomeric aromatic phosphates or melamine pyrophosphate, either of which may also be used with novolac. The flame retardant may also be brominated polystyrene and/or poly(brominated styrene) used without an antimony synergist.

The polyester resin compositions used in the present invention may also optionally include, in addition to the above components, additional additives as long as the presence of these materials does not reduce the optical transmittance of parts made from composition to a point at which laser welding is unfeasible. Examples of additives include heat stabilizers, antioxidants, dyes, pigments, mold release agents, lubricants, UV stabilizers, (paint) adhesion promoters, and the like. When used, the foregoing additives will in combination preferably be present in about 0.1 to about 5 weight percent, based on the total weight of the composition.

The compositions used in the present invention are in the form of a melt-mixed blend, wherein all of the polymeric components are well-dispersed within each other and all of the non-polymeric ingredients are homogeneously dispersed in and bound by the polymer matrix, such that the blend forms a unified whole. The blend may be obtained by combining the component materials using any melt-mixing method. The component materials may be mixed to homogeneity using a melt-mixer such as a single or twin-screw extruder, blender, kneader, Banbury mixer, etc. to give a resin composition. Or, part of the materials may be mixed in a melt-mixer, and the rest of the materials may then be added and further melt-mixed until homogeneous. The sequence of mixing in the manufacture of the polyester resin compositions used in this invention may be such that individual components may be melted in one shot, or the filler and/or other components may be fed from a side feeder, and the like, as will be understood by those skilled in the art.

Molding of the polyester compositions used in the present invention into parts for laser welding can be carried out according to methods known to those skilled in the art. Preferred are commonly used melt-molding methods such as injection molding, extrusion molding, blow molding, and injection blow molding.

The parts are laser welded to other objects and may be used as the relatively transparent object in the laser welding process. Preferred lasers for use in the laser welding process of the present invention are any lasers having a wavelength within the range of 800 nm to 1200 nm. Examples of types of preferred lasers are YAG and diode lasers.

The present invention also includes any laser welded article made from the process of the invention. Useful articles include housings, including those for electrical and electronic sensors. The articles are particularly suitable for use in the engine compartment of vehicles and in other applications where they will be subjected to broad temperature swings. The articles are also suitable for use as parts for office equipment such as printers, copiers, fax machines, and the like.

### Examples

### Sample Preparation and Physical Testing

The components shown in Tables 1 were melt mixed using a twin screw extruder (Werner & Pfleiderer ZSK-40) at a temperature of 250 °C to give a resin composition. Exiting the extruder, the polymer was passed through a die to form strands that were frozen in a quench tank and subsequently chopped to make pellets.

The resultant resin compositions were used to mold 4 mm ISO all-purpose bars. The test pieces were used to measure mechanical properties on samples at 23 °C and dry as molded. The following test procedures were used:

| | |
|---|---|
| Tensile strength and elongation at break: | ISO 527-1/2 |
| Flexural modulus and strength: | ISO 178 |
| Notched and unnotched Izod impact strength: | ISO 180 |

### Thermal Shock Resistance

Stainless steel 40 mm x 23 mm x 8 mm rectangular parallelepipeds were inserted in an injection mold and overmolded with a 1 mm thick layer of each of the polymer compositions given in Table 1 through a pinhole gate. The resulting overmolded blocks were placed in a thermal shock tester that alternately held the samples at -40°C for 1 hour and 140 °C for 1 hour. The number of cycles the samples withstood before the overmolded polymer layer cracked was determined and is given in Table 1. If the samples showed no cracking after 250 cycles testing was concluded and the result is indicated as ">250" in Table 1.

### Light Transmittance

Light transmittance was determined using a Shimadzu® UV-3100 spectrophotometer. A 940 nm light source was directed at either a 1 mm or 2 mm thick molded sample and the diffuse light transmittance was measured within a 120 mm diameter integrating sphere.

### Laser Weld Strength

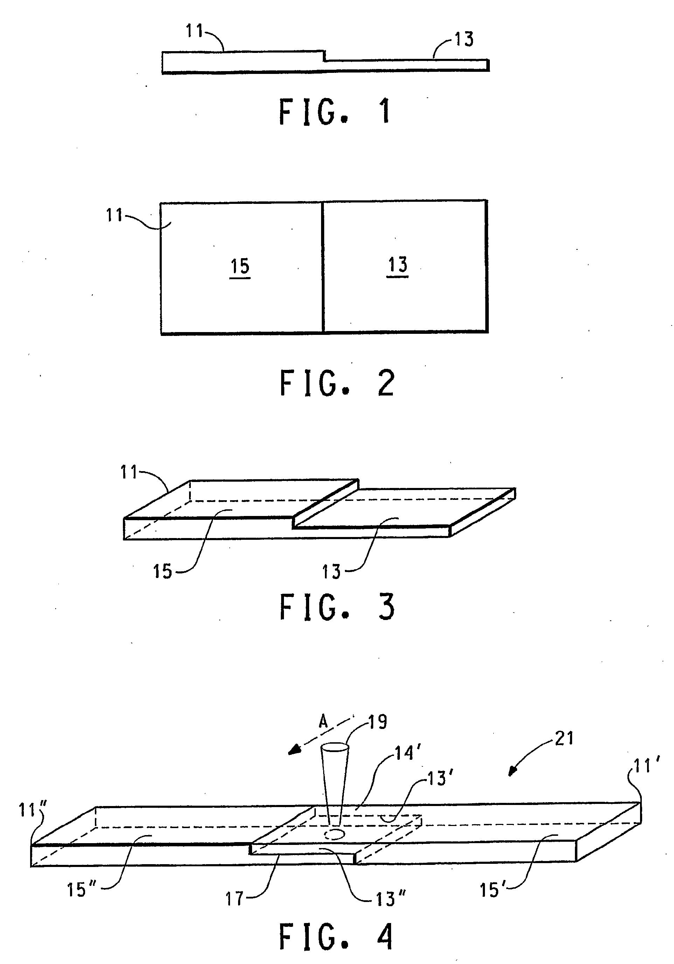

Referring now to the drawings and in particular Fig. 1 - 3, there is disclosed the geometry of the test pieces 11 used to measure weld strength as reported herein. The test pieces 11 are generally rectangular in shape, having dimensions of 70 mm X 18 mm X 3 mm and a 20 mm deep half lap at one end. The half lap defines a faying surface 13 and a shoulder 15.

Referring now to Fig. 4, there is illustrated a pair of test pieces, 11' and 11", that are, respectively, a relatively transparent polymeric object and a relatively opaque polymeric object. The faying surfaces 13' and 13" of pieces 11' and 11" have been brought into contact so as to form a juncture 17 therebetween. Relatively transparent piece 11' defines an impinging surface 14' that is impinged by laser radiation 19 moving in the direction of arrow A. Laser radiation 19 passes through relatively transparent piece 11' and irradiates the faying surface 13" of relatively opaque piece 11 ", causing pieces 11' and 11" to be welded together at juncture 17, thus forming a test bar, shown generally at 21.

In accordance with the invention, the composition disclosed in Examples 1 and 2 was dried and molded into test pieces that were conditioned at 23 °C and 65% relative humidity for 24 hours. By way of comparison (as disclosed in Comparative Examples 1 and 2) compositions outside the scope of the present invention were also molded into test pieces, 11. A relatively opaque composition, made from a 30% glass reinforced poly(butylene terephthalate) containing carbon black and 10 weight percent EBAGMA (as defined in the list of terms used in Table 1 below), was similarly dried and molded into test pieces 11". Test pieces 11' and 11" and test pieces 11 and 11" were then welded together as described above, with a clamped pressure of 0.3 MPa therebetween to form test bars 21. Laser radiation was scanned in a single pass across the width of test pieces 11' and 11 at 2 m/min with a Rofin-Sinar Laser GmbH 940 nm diode laser operating at the power indicated in Table 1. The test bars were further conditioned for 24 hours at 23 °C and 65% relative humidity. The force required to separate test pieces 11' and 11" and 11 and 11" was determined using an Instron® tester clamped at the shoulder of the test bars, applying tensile force in the longitudinal direction of the test bars 21. The Instron® tester was operated at a rate of 2 mm/min. The results are given in Table 1.
The following terms are used in Table 1:
PBT refers to Crastin® 6003, a poly(butylene terephthalate) homopolymer manufactured by E.I. du Pont de Nemours and Co., Wilmington, DE.
Irganox® 1010 refers to an antioxidant manufactured by Ciba Specialty Chemicals, Inc., Tarrytown, NY.
Pentaerythritol tetrastearate is Loxiol® VPG 861 manufactured by Cognis.
Epofriend® AT501 refers to an 20 weight percent epoxidized styrene-butadiene-styrene block copolymer comprising 40 weight percent polystyrene manufactured by Daicel Chemical Industries, Ltd., Osaka, Japan.
Epofriend® AT504 refers to an 10 weight percent epoxidized styrene-butadiene-styrene block copolymer comprising 70 weight percent polystyrene manufactured by Daicel Chemical Industries, Ltd., Osaka, Japan.
EBAGMA refers to an ethylene/*n*-butyl acrylate/glycidyl methacrylate terpolymer made from 66.75 weight percent ethylene, 28 weight percent *n*-butyl acrylate, and 5.25 weight percent glycidyl methacrylate. It has a melt index of 12 g/10 minutes as measured by ASTM method D1238.
Glass fibers refers to Asahi FT592, manufactured by Asahi Glass, Tokyo, Japan.

**Table 1**

| | **Ex. 1** | **Ex. 2** | **Comp. Ex. 1** | **Comp. Ex. 2** |
|---|---|---|---|---|
| PBT | 59.3 | 59.3 | 59.3 | 69.3 |
| Irganox® 1010 | 0.2 | 0.2 | 0.2 | 0.2 |
| Pentaerythritol tetrastearate | 0.5 | 0.5 | 0.5 | 0.5 |
| Epofriend® AT501 | 10 | -- | -- | -- |
| Epofriend® AT504 | -- | 10 | -- | -- |
| EBAGMA | -- | -- | 10 | -- |
| Glass fibers | 30 | 30 | 30 | 30 |
| Tensile strength (MPa) | 135 | 138 | 129 | 158 |
| Elongation at break (%) | 3.6 | 3.6 | 3.6 | 2.9 |
| Flexural strength (MPa) | 209 | 214 | 198 | 239 |
| Flexural modulus (MPa) | 8113 | 8145 | 7966 | 8910 |
| Notched Izod impact strength (kJ/m²) | 14 | 15 | 14 | 12 |
| Unnotched Izod impact strength (kJ/m²) | 83 | 85 | 82 | 84 |
| Thermal shock (cycles) | >250 | >250 | >250 | 150 |
| Transmittance at 940 nm: | | | | |
| 1 mm (%) | 28.5 | 29.5 | 14.9 | 25.8 |
| 2 mm (%) | 16.0 | 15.4 | 6.8 | 15.8 |
| Laser weld strength (kgf) | 115 | 124 | 5 | 123 |
| Laser power (W) | 90 | 110 | 110 | 110 |

All ingredient quantities are given in weight percent relative to the total weight of the composition.

Examples 1 and 2 demonstrate that the use of an epoxidized block copolymer derived from at least one vinyl aromatic compound and at least one conjugated diene in a polyester resin composition yields a composition that can be laser welded and that has excellent thermal shock resistance. In Comparative Example 1 the epoxidized block copolymer has been replaced with EBAGMA, a elastomer often used to toughen polyester compositions. The resulting composition exhibits excellent thermal shock resistance, but also a very poor weld strength when laser welded. In Comparative Example 2, no toughener is added and while the composition can be laser welded with a good weld strength, it has significantly inferior thermal shock resistance.

## Claims

1. A process for welding a first polymeric object to second polymeric object using laser radiation, wherein said first polymeric object is relatively transparent to said laser radiation and said second object is relatively opaque to said laser radiation, said first and said second objects each presenting a faying surface, said first object presenting an impinging surface, opposite said faying surface thereof, said process comprising the steps of (1) bringing the faying surfaces of said first and second objects into physical contact so as to form a juncture therebetween and (2) irradiating said first and second objects with said laser radiation such that said laser radiation impinges the impinging surface, passes through said first object and irradiates said faying surface of said second object, causing said first and second objects to be welded at the juncture of the faying surfaces, wherein said first polymer object is formed from a polyester composition comprising
(a) about 30 to about 98 weight percent of a thermoplastic polyester;
(b) about 2 to about 30 weight percent of an epoxidized block copolymer that is obtained by epoxidizing
(i) a block copolymer comprising at least one polymer block (A) derived from at least one aromatic vinyl compound and at least one polymer block (B) that is derived from at least one conjugated diene, or
(ii) a block copolymer that is a partial hydrogenation product of (i); and
(c) 0 to about 50 weight percent of at least one inorganic filler or reinforcing agent,
wherein the above-stated percentages of components (a)-(c) are based on the total weight of the composition.

2. The process of claim 1 wherein said thermoplastic polyester is selected from the group consisting of poly(ethylene terephthalate) (PET), poly(1,4-butylene terephthalate) (PBT), poly(propylene terephthalate) (PPT), poly(1,4-cyclohexylene dimethylene terephthalate) (PCT), copolymers of at least two of PET, PBT, PPT, and PCT, mixtures of at least two of PET, PBT, PPT, and PCT, and mixtures of any of the forgoing.

3. The process of claim 1 wherein the filler or reinforcing agent is present in about 5 to about 50 weight percent.

4. The process of claim 1 wherein the filler or reinforcing agent is glass fibers.

5. The process of claim 1 wherein the epoxidized block copolymer is an epoxidized styrene-butadiene-styrene block copolymer.

6. An article of manufacture that is laser welded by the process of Claim 1.

7. The article of claim 6 in the form of an electrical or electronic housing.

## Patentansprüche

1. Verfahren zum Schweißen eines ersten polymeren Objekts an ein zweites polymeres Objekt unter Anwendung von Laserstrahlung, wobei das erste polymere Objekt für die Laserstrahlung relativ transparent ist und das zweite Objekt für die Laserstrahlung relativ opak ist, wobei das erste und zweite Objekt jeweils eine Stoßfläche aufweisen, wobei das erste Objekt eine Auftrefffläche der Stoßfläche davon gegenüber präsentiert, wobei das Verfahren die Schritte umfasst des (1) physischen Inkontaktbringens der Stoßflächen des ersten und zweiten Objekts, um eine Verbindungsstelle dazwischen zu bilden und (2) Bestrahlens des ersten und zweiten Objekts mit der Laserstrahlung, derart, dass die Laserstrahlung auf die Auftrefffläche auftrifft, durch das erste Objekt hindurchgeht und die Stoßfläche des zweiten Objekts bestrahlt, wodurch verursacht wird, dass das erste und zweite Objekt an der Verbindungsstelle der Stoßflächen geschweißt werden, wobei das erste Polymerobjekt aus einer Polyesterzusammensetzung gebildet ist, umfassend
(a) etwa 30 bis etwa 98 Gewichtsprozent eines thermoplastischen Polyesters;
(b) etwa 2 bis etwa 30 Gewichtsprozent eines epoxidierten Blockcopolymers, das durch Epoxidieren erhalten wird von
(i) einem Blockcopolymer umfassend mindestens einen Polymerblock (A), der von mindestens einer aromatischen Vinylverbindung und mindestens einem Polymerblock (B) abgeleitet ist, der von mindestens einem konjugierten Dien abgeleitet ist, oder
(ii) einem Blockcopolymer, das ein teilweises Hydrierprodukt von (i) ist; und
(c) 0 bis etwa 50 Gewichtsprozent mindestens eines anorganischen Füllstoffs oder Verstärkungsmittels,
wobei die oben angegebenen Prozentsätze der Komponenten (a)-(c) auf das Gesamtgewicht der Zusammensetzung bezogen sind.

2. Verfahren nach Anspruch 1, wobei der thermoplastische Polyester aus der Gruppe ausgewählt ist bestehend aus Poly(ethylenterephthalat) (PET), Poly(1,4-Butylenterephthalat) (PBT), Poly(propylenterephthalat (PPT), Poly(1,4-Cyclohexylendimethylenterephthalat) (PTC), Copolymeren von mindestens zwei von PET, PBT, PPT und PCT, Mischungen von mindestens zwei von PET, PBT, PPT und PCT, Mischungen von irgendwelchen der obigen.

3. Verfahren nach Anspruch 1, wobei der Füllstoff oder das Verstärkungsmittel in einer Menge von etwa 5 bis etwa 50 Gewichtsprozent vorliegt.

4. Verfahren nach Anspruch 1, wobei der Füllstoff oder das Verstärkungsmittel aus Glasfasern besteht.

5. Verfahren nach Anspruch 1, wobei das epoxidierte Blockcopolymer ein epoxidiertes Styrol-Butadien-Styrol-Blockcopolymer ist.

6. Herstellungsartikel, der durch das Verfahren nach Anspruch 1 lasergeschweißt wird.

7. Artikel nach Anspruch 6 in Form eines elektrischen oder elektronischen Gehäuses.

## Revendications

1. Procédé de soudage d'un premier objet polymère à un second objet polymère utilisant le rayonnement laser, dans lequel ledit premier objet polymère est relativement transparent audit rayonnement laser et ledit second objet est relativement opaque audit rayonnement laser, ledit premier et ledit second objets présentant chacun une surface de butée, ledit premier objet présentant une surface d'impact, opposée à ladite surface de butée de celui-ci, ledit procédé comprenant les étapes consistant à (1) porter les surfaces de butée desdits premier et second objets en contact physique afin de former une jonction entre elles et (2) irradier lesdits premier et second objets avec ledit rayonnement laser de sorte que ledit rayonnement laser frappe la surface d'impact, passe à travers ledit premier objet et irradie ladite surface de butée dudit second objet, provoquant la soudure desdits premier et second objets au niveau de la jonction des surfaces de butée, dans lequel ledit premier objet polymère est formé à partir d'une composition polyester comprenant
(a) environ 30 à environ 98 pour cent en poids d'un polyester thermoplastique;
(b) environ 2 à environ 30 pour cent en poids d'un copolymère séquencé époxydé qui est obtenu par époxydation
(i) d'un copolymère séquencé comprenant au moins une séquence polymère (A) dérivée d'au moins un composé vinylique aromatique et au moins une séquence polymère (B) qui est dérivée d'au moins un diène conjugué, ou
(ii) d'un copolymère séquencé qui est un produit d'hydrogénation partielle de (i); et
(c) 0 à environ 50 pour cent en poids d'au moins une charge inorganique ou d'un agent de renfort,
dans lequel les pourcentages énoncés ci-dessus des composants (a) à (c) sont basés sur le poids total de la composition.

2. Procédé selon la revendication 1 dans lequel ledit polyester thermoplastique est sélectionné parmi le groupe constitué du poly(téréphtalate d'éthylène) (PET), du poly(téréphtalate de 1,4-butylène) (PBT), du poly(téréphtalate de propylène) (PPT), du poly(téréphtalate de 1,4-cyclohexylène diméthylène) (PCT), des copolymères d'au moins deux parmi le PET, PBT, PPT, et PCT, des mélanges d'au moins deux parmi le PET, PBT, PPT, et PCT, et des mélanges de n'importe lesquels des précédents.

3. Procédé selon la revendication 1 dans lequel la charge ou l'agent de renfort est présent(e) en une quantité d'environ 5 à environ 50 pour cent en poids.

4. Procédé selon la revendication 1 dans lequel la charge ou l'agent de renfort est des fibres de verre.

5. Procédé selon la revendication 1 dans lequel le copolymère séquencé époxydé est un copolymère séquencé époxydé de styrène-butadiène-styrène.

6. Article de manufacture qui est soudé au laser par le procédé selon la revendication 1.

7. Article selon la revendication 6 se présentant sous la forme d'un boîtier électrique ou électronique.
